# EUROPEAN PATENT APPLICATION

(11) **EP 3 667 281 A1**
(43) Date of publication of application: **17.06.2020**
(21) Application number: 18382925.8
(22) Date of filing: 13.12.2018
(51) Int. Cl.: G01M 5/00, G01M 17/10, G01N 19/08

(54) **FAILURE MONITORING SYSTEM FOR A MACHINE ELEMENT FOR DETECTING CRACK PROPAGATION**

(71) Applicant: Fundación Tecnalia Research & Innovation, 20009 San Sebastián, Guipúzcoa (ES)
(72) Inventor: Gascón Alvarez, Jaime, 20009 San Sebastián - Guipúzcoa (ES)
(74) Representative: Balder IP Law, S.L.

(57) **Abstract**

A failure monitoring system for a machine element (21, 31, 41, 51), in particular for an axle (22), for detecting a fatigue crack propagation (a, a_{detected}) in said machine element (21, 31, 41, 51) is provided, wherein said machine element (21, 31, 41, 51) has a first end face (24, 34, 44, 54), a second end face (35, 45, 55) opposite to said first end (24, 34, 44, 54), and a centre line (23, 33, 43, 53) extending from said first end face (24, 34, 44, 54) to said second end face (35, 45, 55). The failure monitoring system comprises at least one bore hole (27, 37, 47, 47', 57) in said first end face (24, 34, 44, 54) of said machine element (21, 31, 41, 51), wherein said at least one bore hole (27, 37, 47, 47', 57) is filled with a pressurized fluid (F) and is closed at said first end face (24, 34, 44, 54) in such way that, in a non-critical condition of said machine element (21, 31, 41, 51), a control pressure (p_{control}) inside of said at least one bore hole (27, 37, 47, 47', 57) is a positive pressure (p₀); at least a first pressure sensor (28, 38, 48, 48', 58) being configured to measure said control pressure (p_{control}) inside of said at least one bore hole (27, 37, 47, 47', 57); and a fatigue crack propagation detection means being configured to indicate a critical condition of said machine element (21, 31, 41, 51) in case said first pressure sensor (28, 38, 48, 48', 58) measures a decrease of said control pressure (p_{control}) below a predetermined reference pressure (pref), wherein said predetermined reference pressure (p_{ref}) is less than or equal to said positive pressure (p₀). A railway axle (22) and a bolt for a foundation of a wind turbine, each comprising a failure monitoring system are also provided.

## Description

### TECHNICAL FIELD

The present invention relates to a failure monitoring system for a machine element, in particular an axle or a bolt, for detecting crack propagation. Furthermore, the present invention relates to a railway axle and a bolt featuring large dimensions, for example a bolt suitable for a foundation of a wind turbine.

### STATE OF THE ART

Machine elements such as axles, axle shafts, shafts, bolts, etc. are exposed to various stresses and strains especially during the operation of the machines in which the machine elements are mounted. In particular, a railway axle of a railway vehicle such as a train is exposed to various loads during the operation of the railway vehicle. Accordingly, railway axles often are the source of a failure of the train and such failure can lead to severe consequences such as the derailment of the railway vehicle and train accidents. Similarly, bolts featuring large dimensions, for example but without limitation those for foundations of wind generators, are also exposed to loads and stresses that may lead to the failure thereof, thereby weakening the structure to which they are attached, for example the foundation of a wind generator.

More precisely, the failure of certain machine elements, for example railway axles, often is caused by fracture due to a fatigue crack propagation. Fatigue cracks or similar defects of the generally metallic material of the machine elements is a common phenomenon which cannot be avoided. The formation of a crack as well as its propagation inside of the material can be caused by several reasons, that is, due to the weakening of the material caused by repeatedly applied loads, due to the weakening of the material caused by constantly applied loads, due to corrosion damage of the material, due to fretting, etc. In general, it will be referred to the term "fatigue crack" in the present document in case a crack or a flaw caused by any of these events is meant and it will be referred to the term "fatigue crack propagation" in case the growth of said fatigue crack in the machine element is meant.

Consequently, railway axles and machine elements in general are important security parts and the prevention of its failure is an important task in engineering. In particular, the maintenance of the machine elements has to fulfil high quality standards in order to reliably avoid the failure of a machine element during its operation due to a critical fatigue crack propagation.

Usually, elongated machine elements are checked for the presence of fatigue cracks optically. In case of a railway vehicle, this can mean that the railway vehicle needs to be stopped. In case of bolts of foundations of wind turbines, access to the same for visual inspection may be difficult. The machine elements usually cannot be operated during their investigation or monitoring with regard to fatigue cracks. Such maintenance is time-consuming and also cost-intensive, in particular due to the dependence on worker doing such maintenance investigation. In addition, such work done by humans is susceptible to mistakes due to the risk of overlooking a fatigue crack.

Therefore, there is a need for a failure monitoring system for a machine element for detecting a fatigue crack propagation which failure monitoring system could operate the maintenance checks of the machine element in a less time-consuming and cost-intensive but more reliable manner.

### DESCRIPTION OF THE INVENTION

It is an object of the invention to provide a failure monitoring system for a machine element for detecting a fatigue crack propagation in said machine element according to which a failure of the machine element due to the propagation of a fatigue crack can be avoided. In particular, it is desirable to reliably identify a critical fatigue crack propagation in time and in a real-time manner during the operation of the machine element.

This object is solved by a failure monitoring system according to claim 1. Advantageous embodiments are described in the claims referring back to claim 1.

Furthermore, it is an object of the invention to provide a railway axle that is less susceptible to failure due to fatigue crack propagation. It is also an object of the inventio to provide a bolt for a foundation of a wind turbine that is less susceptible to failure due to crack propagation. These objects are solved by a railway axle according to claim 13 and a bolt according to claim 14.

In detail, according to the present invention, it is provided a failure monitoring system for a machine element, in particular for an axle or a bolt, for detecting a fatigue crack propagation in said machine element, the failure monitoring system comprising said machine element, wherein said machine element has a first end face, a second end face opposite to said first end, and a centre line extending from said first end face to said second end face. The failure monitoring system is characterised in that it comprises: at least one bore hole in said first end face of said machine element, wherein said at least one bore hole is filled with a pressurized fluid and is closed at said first end face in such way that, in a non-critical condition of said machine element, a control pressure inside of said at least one bore hole is a positive pressure; at least a first pressure sensor being configured to measure said control pressure inside of said at least one bore hole; and a fatigue crack propagation detection means being configured to indicate a critical condition of said machine element in case said first pressure sensor measures a decrease of said control pressure below a predetermined reference pressure, wherein said predetermined reference pressure is less than or equal to said positive pressure.

The machine element such as an axle, an axle shaft, etc., particularly for a railway vehicle such as a train, has a circular or substantially circular cross-section and usually has an elongated extension from its first end face to its second end face. That is, its extension along a centre line of the machine element between its first end face and its second end face is greater than its extension in the directions perpendicular to the centre line. The first end face and the second end face can be approximately perpendicular to the centre line of the machine element. In particular, the machine element can be approximately axially symmetrical around an axis. This axis then is the centre line of the machine element. The present invention can also be applied to machine elements, in general, being different from the mentioned axle, which machine elements have a circular or substantially circular cross-section and are exposed to loads potentially causing failure due to fatigue crack propagation, for instance different kind of shafts or axles in several machines, or bolts, for instance bolts for foundations of wind turbines and which generally feature large dimensions. In some cases, the machine elements are elongated machine elements, namely, the machine elements have an elongated extension from the first end face thereof to the second end face thereof; in the context of the present disclosure, a machine element is regarded as an elongated machine element when an extension in the axial direction of the machine element is greater than an extension in the radial direction, i.e. the diameter.

The failure monitoring system according to the invention comprises at least one bore hole in said first end face of the machine element. Also, a plurality of bore holes in the first end face can be provided. Each of the at least one bore hole can extend from the first end face of the machine element to a specific depth inside of the machine element, in this case as a kind of blind hole, or up to the second end face of the machine element, in this case as a kind of through bore hole through the entire extension along the centre line of the machine element. In particular, each of the at least one bore hole can extend parallel to the centre line or aligned with the centre line of the machine element, wherein the extension of the bore hole being aligned with the centre line is preferred in the case of providing only one bore hole in the first end face of the machine element. The cross-section of the at least one bore hole preferably is circular but the invention could also be carried out with a cross-section of a bore hole being different from a circular one.

Inside of the at least one bore hole, a pressurized fluid is provided, wherein, as pressurized fluids, any fluid medium, preferably a liquid, can be used which pressurized fluid is able to be filled into the bore hole, to be subjected to a certain pressure, and to maintain said pressure inside of the bore hole. Due to the filling of the pressurized fluid into the bore hole and due to the closing of the bore hole in the first end face of the machine element, a control pressure is obtained inside of the bore hole, wherein the control pressure is a positive pressure. That is, the control pressure with the value of the positive pressure is higher than the ambient pressure surrounding the failure monitoring system or rather the machine element, wherein the ambient pressure usually is the atmospheric pressure.

The control pressure in terms of the positive pressure is maintained inside of the bore hole due to the fact that the bore hole is closed. The closing can be realised for instance by a separate closure such as a pressure cap, etc. The closing is such that the bore hole is pressure-tightly closed so that, in a working condition, the bore hole closed in such a manner does not lose the control pressure over time but the control pressure in terms of the positive pressure is maintained inside of the bore hole. No pressurized fluid inside of said closed bore hole can exit in said working condition.

This standard case in terms of the control pressure inside of the bore hole being a specific predetermined positive pressure is also called the non-critical condition of the machine element. In this non-critical condition of the machine element, a critical fatigue crack propagation has not occurred yet and the machine element can continue operating without danger of failure due to a fatigue crack. In contrast to the non-critical condition of the machine element, the machine element can also be in a critical condition in which a critical fatigue crack propagation has been reached and the machine element should not be operated further due to the risk of failure due to a fatigue crack. The failure monitoring system further comprises a first pressure sensor that can measure the control pressure inside of the at least one bore hole. The first pressure sensor can be configured to continuously or permanently measure the control pressure. Therefore, in the non-critical condition of the machine element, the first pressure sensor measures the control pressure with the value of the positive pressure above the atmospheric pressure. The failure monitoring system can also comprise more than only one first pressure sensor, for instance for the sake of redundancy and security with regard to measuring the control pressure inside of the bore hole.

In the event of a plurality of bore holes in the machine element, each of these bore holes can be filled with a pressurized fluid and closed such that a positive pressure is realised therein as described before. Then, also several first pressure sensor can be provided, for instance one first pressure sensors per bore hole, wherein each of the first pressure sensor is configured to measure the control pressure inside of the respective bore hole in the described manner.

In order to indicate the critical condition of the machine element and to thereby indicate that the operation of the machine element should be stopped, the failure monitoring system further comprises a fatigue crack propagation detection means. In the event of a fatigue crack propagating to a certain critical length, the crack will reach one of the at least one bore holes, collide with said at least one bore hole, and, thereby, some of the pressurized fluid inside of the respective bore hole will exit from the bore hole. This will result in a drop of the control pressure inside of the respective bore hole. Hence, a pressure loss will be detected at least by the respective first pressure sensor which measures the control pressure inside of the respective bore hole. The fatigue crack propagation detection means may be an electronic device configured to control the sensors, process the measurements of the sensors and communicate with one or more other electronic devices so as to indicate the status of the machine element in accordance with the processed measurements. For instance, the one or more other electronic devices may be an electronic device that controls the machine (or part thereof) that comprises the machine element with the failure monitoring system.

Accordingly, in case the first pressure sensor measures a decrease of the control pressure below a predetermined reference pressure, it can be assumed that a fatigue crack has propagated to its critical length and, therefore, the fatigue crack propagation detection means will indicate the critical condition of the machine element. Said predetermined reference pressure can be less than or equal to said positive pressure which is the standard control pressure in the bore hole in the non-critical condition of the machine element. Thus, the failure monitoring system can be configured such that any pressure drop inside of the bore hole already leads to a warning, in case said reference pressure is equal to said positive pressure. Alternatively, the failure monitoring system can be configured such that a warning will only occur in case the pressure drop has reached a certain value, in case said reference pressure is less than said positive pressure.

The fatigue crack propagation detection means can be provided in supplementation to the first pressure sensor and can be in communication with said pressure sensor in such way that it can detect the pressure loss measured by said first pressure sensor. Alternatively, the fatigue crack propagation detection means can be integrated into said first pressure sensor or be a part of it itself.

In the event of a plurality of bore holes and/or a plurality of first pressure sensors, a single fatigue crack propagation detection means can be provided indicating a critical condition in a general manner in case any of the pressure sensors measures the described pressure loss inside of the respective bore hole. Alternatively, several fatigue crack propagation detection means can be provided indicating specifically in which bore hole a pressure loss has been measured so that the indication of the fatigue crack propagation can be more precisely.

Due to the detection of a fatigue crack propagation in the machine element by the failure monitoring system in the described manner, a failure monitoring system for a machine element is achieved which reliably identifies a critical fatigue crack propagation in time. According to the invention, this identification of critical fatigue cracks can be carried out in a real-time manner during the operation of the machine element. Therefore, no stopping of the operation and no individual optical control of the machine element has to be executed. The drawbacks of the state of the art in terms of the time-consuming and cost-intensive monitoring of machine elements with regard to existing fatigue defects are overcome.

In a preferred embodiment, said machine element is an axle for a railway vehicle. Said axles, such as railway axles or railroad axles or axle shafts, are frequently exposed to loads that can lead to failure due to fatigue crack propagation. In case of the use of the failure monitoring system in a railway vehicle, such as a train, the failure monitoring system, in particular its fatigue crack propagation detection means, can be configured in such way that it can stop the train in the event of a detection of the critical condition of the elongated machine element due to fatigue crack propagation. Hence, an effective failure monitoring system, that can prevent train accidents, is provided.

In a preferred embodiment, said elongated machine element is a bolt, for example a bolt suitable for a foundation of a wind turbine. Such bolts are subject to loads and stresses, due to the weight and pressure supported by the wind turbines, that can lead to failure due to crack propagation. In case of the use of the failure monitoring system in a wind turbine, the failure monitoring system, in particular its crack propagation detection means, can be configured in such way that it can notify a control centre or an operator that maintenance tasks are necessary for replacing the affected bolt.

In a particular embodiment, said at least one bore hole extends approximately centric through said machine element and has a predetermined diameter. The predetermined diameter can be determined depending on a critical crack propagation length in such way that the failure monitoring system indicates a warning in case the predetermined critical crack propagation length has been reached and collides with the at least one bore hole. The critical crack propagation length is a value depending on the material used for the machine element and the expected loads during the operation of the machine element and it can be assessed in advance with the help of fracture mechanics and simulations. Preferably, said at least one bore hole extends aligned with said centre line through said machine element.

In another particular embodiment, said at least one bore hole extends approximately eccentric through said machine element. In contrast to a bore hole extending centrically through the machine element, a bore hole extending eccentrically is arranged closer to the outer surface of the machine element where the beginning of a fatigue crack propagation usually is. Hence, a fatigue crack propagation can be detected earlier or, in comparison to a centric bore hole detecting a fatigue crack propagation equally early, the diameter of the bore hole extending eccentrically can be smaller. Preferably, said at least one bore hole extends parallel to said centre line of the machine element.

In a particular embodiment, the failure monitoring system comprises a plurality of said at least one bore holes arranged approximately equidistantly on a bore hole circle having a predetermined diameter around said centre line. Due to this distribution of several bore holes on the bore hole circle, a bigger area is covered in which a propagating fatigue crack would collide with one of the bore holes in comparison to the presence of only one bore hole. Hence, an even more secure failure monitoring system can be achieved. The predetermined diameter of the bore hole circle as well as the specific number of the provided bore holes, again, can be determined in advance depending on the material used and the expected loads during the operation of the machine element. The values can be assessed in advance with the help of fracture mechanics and simulations.

In a particular embodiment, each of said at least one bore hole has a diameter approximately between 4 mm and 10 mm, in particular of approximately 8 mm. Such bore holes have been found out as being preferable with regard to, on the one hand, the remaining strength and stability of the machine element as every bore hole as such causes a weakening of the material. On the other hand, the size of the bore holes has been found out to be sufficient with regard to filling the bore hole with pressurized fluid and with regard to measuring the control pressure inside of the bore hole reliably with the pressure sensors.

In a particular embodiment, said at least one bore hole is closed at said first end face by said first pressure sensor. Hence, a failure monitoring system is achieved that is preferably advantageous with regard to its simplified structure. Correspondingly, less components need to be used in the structure of the failure monitoring system as the already available first pressure sensor can be used to achieve the required closing of the bore hole. The first pressure sensor serves for measuring the pressure as well as for closing the bore hole and, therefore, an additional closure is not needed. Accordingly, the first pressure sensor can be arranged at the one end of the bore hole at the first end face of the machine element. Alternatively or respectively, the first pressure sensor can be integrated into a closure of the bore hole, for instance it can be part of the before mentioned pressure cap that closes the bore hole in the first end face in a pressure-tightly manner. Correspondingly, the pressure cap can also serve as first pressure sensor or the other way around. According to this particular embodiment, it is essential that the function of closing the bore hole as well as of measuring the control pressure inside of the bore hole is realised by only one member and not by two different members or separate elements.

In a particular embodiment, the failure monitoring system further comprises a second pressure sensor being configured to measure said control pressure inside of said at least one bore hole. Hence, an even more secure failure monitoring system is achieved since, due to the redundancy of the pressure sensors, a fatigue crack propagation can be securely detected even if a pressure loss in the bore hole only is measured by one of the pressure sensors. The second pressure sensor preferably is arranged at the one end of the bore hole opposite to the arrangement of the first pressure sensor, that is, the second pressure sensor preferably is arranged opposite to the first end face of the machine element. The second pressure sensor can have the same characteristics as already described with regard to the first pressure sensor. In particular, the control pressure inside of the bore hole can be continuously or permanently measured by the second pressure sensor, and, in case of a plurality of bore holes, each of the bore hole can comprise a first pressure sensor and additionally a second pressure sensor.

In a particular embodiment, said at least one bore hole extends to said second end face of the machine element and is closed at said second end face in such way that, in said non-critical condition of said machine element, said control pressure inside of said at least one bore hole is maintained. Hence, an effective failure monitoring system can be achieved for the detection of a possible fatigue crack propagation in the entire machine element with regard to its extension along its centre line. Accordingly, the at least one bore hole extends from the first end face up to the second end face through the entire machine element and possible fatigue cracks can be detected anywhere with regard to the extension of the machine element in the direction of its centre line. The closing of such a bore hole at the second end face of the machine element can be achieved in the respective manner as already described with regard to the closing at the first end face.

In a particular embodiment, said at least one bore hole is closed at said second end face by said second pressure sensor. Hence, a failure monitoring system is achieved that is preferably advantageous with regard to its simplified structure. The closing of the bore hole by the second pressure sensor can be achieved in the respective manner as already described with regard to the closing at the first end face by the first pressure sensor. In particular, the second pressure sensor can be arranged at the end of the bore hole opposite to the arrangement of the first pressure sensor, that is, at the second end face of the machine element. Accordingly, the first pressure sensor and the second pressure sensor can be arranged at opposite ends of the at least one bore hole.

According to another aspect of the invention, a railway axle comprising a failure monitoring system as mentioned before is provided. Due to the presence of the described failure monitoring system in the railway axle, a warning in case of critical fatigue crack propagation can be given during the operation of the railway axle and, in this case, the operation of the railway axle and, thereby, the running of the railway vehicle can be stopped. Hence, a railway axle is achieved that is less susceptible to failure due to fatigue crack propagation and a more secure railway axle is achieved. Train accidents due to railway axle failure because of fatigue crack propagation can be prevented in a reliable manner.

According to another aspect of the invention, a bolt for a foundation of a wind turbine comprising a failure monitoring system as mentioned before is provided.

The different aspects and embodiments of the invention defined in the foregoing can be combined with one another, as long as they are compatible with each other.

Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1A shows a side view of an elongated machine element in terms of a railway axle according to the state of the art as a partially sectional view.
Figure 1B shows the enlarged detail 1B of Fig. 1A with the elongated machine element of Fig. 1A being in a critical condition due to a critical fatigue crack propagation.
Figure 2A shows a failure monitoring system according to a particular embodiment of the invention, the failure monitoring system being integrated into a machine element being in a non-critical condition.
Figure 2B shows the failure monitoring system of Fig. 2A, this time with the machine element being in a critical condition due to a critical fatigue crack propagation.
Figure 3A is a schematic perspective view of a failure monitoring system according to a particular embodiment of the invention, being integrated into a machine element.
Figure 3B shows the failure monitoring system of Fig. 3A in a cross-sectional view according to lines 3B in Fig. 3A, with the machine element being in a critical condition due to a critical fatigue crack propagation.
Figure 4A is a schematic perspective view of a failure monitoring system according to a particular embodiment of the invention, being integrated into a machine element.
Figure 4B shows the failure monitoring system of Fig. 4A in a cross-sectional view according to lines 4B in Fig. 4A, with the machine element being in a critical condition due to a critical fatigue crack propagation.
Figure 5A is a schematic perspective view of a failure monitoring system according to a particular embodiment of the invention, being integrated into a machine element.
Figure 5B shows the failure monitoring system of Fig. 5A in a cross-sectional view according to lines 5B in Fig. 5A, with the machine element being in a critical condition due to a critical fatigue crack propagation.
Figure 6 shows an exemplary machine element having represented therein failure processes in the form of a fully circumferential fatigue crack.

### DESCRIPTION OF A WAY OF CARRYING OUT THE INVENTION

The following description is not to be taken in a limiting sense but is given solely for the purpose of describing the broad principles of the invention. Embodiments of the invention will be now described by way of example, with reference to the above-mentioned drawings showing elements and results according to the invention.

In the following description, same reference signs refer to same elements and, respectively, same features. Accordingly, a description given with regard to a specific figure also is valid with regard to elements in other figures. Thereby, a repeated description is avoided. Furthermore, single features described with regard to a specific embodiment are also applicable in different embodiments.

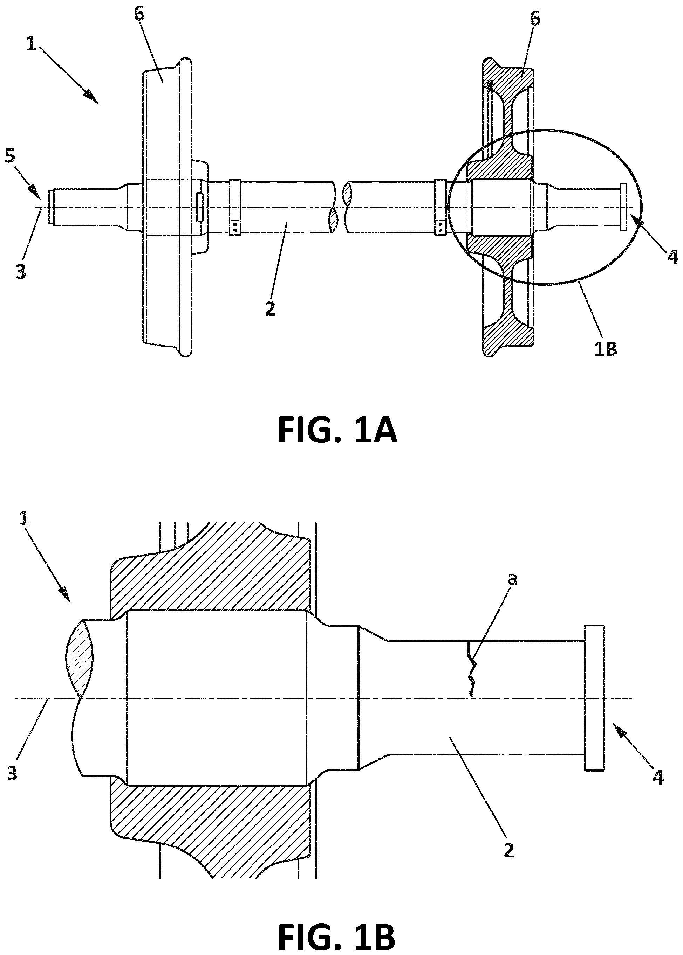

Figure 1A shows a side view of an elongated machine element 1 in terms of a railway axle 2 of a railway vehicle, such as a train, according to the state of the art as a partially sectional view. The elongated machine element 1 has an elongated extension along a centre line 3 from its first end face 4 to its second end face 5. The first end face 4 and the second end face 5 are approximately perpendicular to the centre line 3 of the elongated machine element 1 and the elongated machine element 1 is approximately axially symmetrical around the centre line 3.

Especially during the operation of the railway vehicle that is not illustrated entirely, the axle 2 or the elongated machine element 1 is exposed to various loads such as varying stresses and strains. Therefore, a failure of the elongated machine element 1 can occur and often is caused by fracture due to a critical fatigue crack propagation. Such a critical fatigue crack propagation is illustrated in figure 1B.

Figure 1B shows the enlarged detail 1B of figure 1A with the elongated machine element 1 being in a critical condition due to a critical fatigue crack propagation. A fatigue crack propagation 'a' has occurred in the railway axle 2 and the fatigue crack has already reached the centre line 3 of the elongated machine element 1. In order to avoid a failure of the elongated machine element 1, which for instance can cause a train accident by derailment of the railway vehicle, the shown fatigue crack propagation 'a' needs to be detected as soon as a critical length of the fatigue crack has occurred.

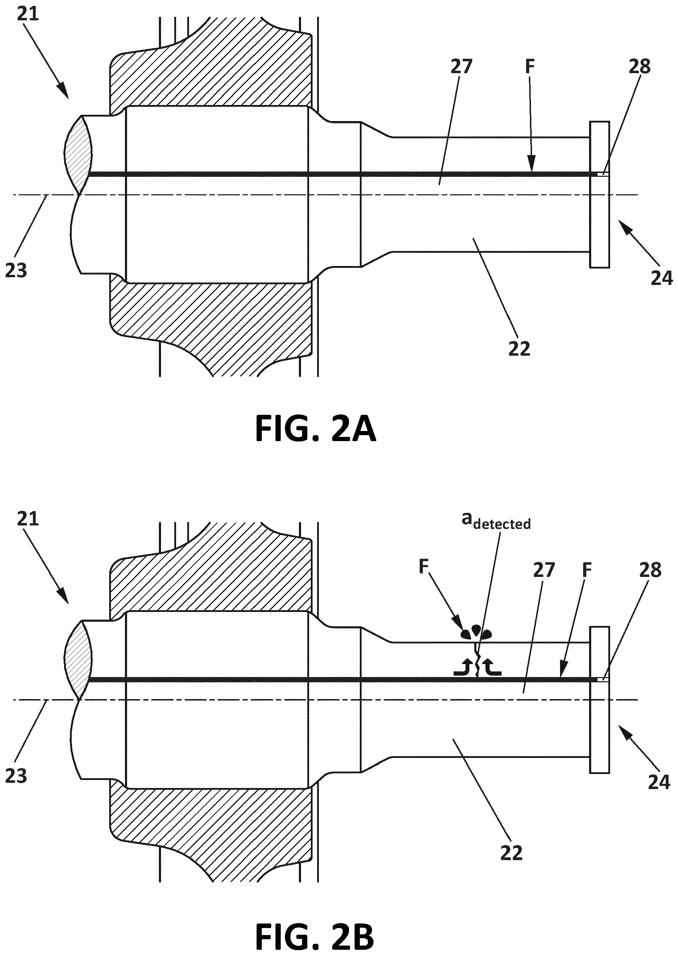

A failure monitoring system according to the invention can ensure the detection of such critical fatigue crack propagation in time. Figures 2A and 2B show such a failure monitoring system according to a particular embodiment of the invention. In figures. 2A and 2B, a machine element 21, which may be an elongated machine element, is shown corresponding to the machine element 1 according to the state of the art as described before. The machine element 21 has a circular cross-section as best seen in figure 2B. In contrast to the elongated machine element 1 of the state of the art, the machine element 21 is equipped with a failure monitoring system according to the invention.

In figure 2A the failure monitoring system is integrated into the machine element 21 being in a non-critical condition. That is, a critical fatigue crack propagation has not occurred yet and the machine element 21 and the respective railway vehicle can be operated without risk of failure due to a fatigue crack propagation.

The machine element 21 in terms of a railway axle 22 is shown in parts, namely with regard to his right-side end in figure 2A. The machine element 21 has a centre line 23 and, on the right side in figure 2A, the first end face 24 of the machine element 21 is shown. The failure monitoring system of the shown embodiment according to the invention comprises a bore hole 27 in the first end face 24. The bore hole 27 extends through the machine element 21 eccentrically; in some embodiments such as the one of figures 2A-2B, the bore hole 27 also extends parallel to the centre line 23. The bore hole 27 is filled with a pressurized fluid F and is closed at the first end face 24. The closure of the bore hole 27 is realised by a first pressure sensor 28.

The bore hole 27 is closed in such way that, in the shown non-critical condition of the machine element 21, a control pressure p_{control} inside of the bore hole 27 is a positive pressure po. That is, the control pressure p_{control} with the value of the positive pressure po is higher than the ambient pressure surrounding the failure monitoring system or rather surrounding the machine element 21, wherein the ambient pressure usually is the atmospheric pressure. Accordingly, in the shown non-critical condition of the machine element 21, the pressurized fluid F stays inside of the bore hole 27 and the control pressure p_{control} in terms of the positive pressure po is maintained inside of the bore hole 27.

The first pressure sensor 28 is configured to measure the control pressure p_{control} inside of the bore hole 27 continuously in real-time. Furthermore, the pressure sensor 28 is configured to give the information of the measured control pressure p_{control} to a fatigue crack propagation detection means. This fatigue crack propagation detection means can be in communication with the first pressure sensor 27 or it can be realised by the first pressure sensor 27 itself. The fatigue crack propagation detection means is configured to indicate a critical condition of the machine element 21 in case the first pressure sensor 28 measures a decrease of the control pressure p_{control} below a predetermined reference pressure p_{ref}. The predetermined reference pressure p_{ref} can be less than or equal to the positive pressure po, which is the standard control pressure in the bore hole 27 in the non-critical condition of the machine element 21.

Accordingly, in the shown embodiment of figure 2A, the first pressure sensor 28 measures the standard control pressure p_{control} in terms of the positive pressure po and, respectively, the fatigue crack propagation detection means does not indicate a critical condition of the machine element 21 due to the presence of a non-critical condition of the machine element 21 because of the absence of a critical fatigue crack propagation in figure 2A.

In contrast to figure 2A, figure 2B shows the failure monitoring system this time with the machine element 21 being in a critical condition due to a critical fatigue crack propagation a_{detected}. As can be seen in figure 2B, the fatigue crack has reached the bore hole 27 which is filled with the pressurized fluid F. As a result, pressurized fluid F will exit from the bore hole 27. Accordingly, the control pressure p_{control} drops from its standard value in terms of the positive pressure po. This pressure loss inside of the bore hole 27 is measured by the first pressure sensor 28 and, thereby, also detected by the fatigue crack propagation detection means. Consequently, the fatigue crack propagation detection means will indicate a critical condition of the machine element 21 in case the pressure loss has reached a predetermined value. That is, in case the first pressure sensor 28 measures a decrease of said control pressure p_{control} below a predetermined reference pressure p_{ref} having a value of the positive pressure po, then any pressure loss inside of the bore hole 27 will lead to an indication of the critical condition of the machine element 21. In case the predetermined reference pressure p_{ref} has been chosen to have a value less than the positive pressure po, then only a pressure loss inside of the bore hole 27 of a certain amount, namely the difference between the positive pressure po and the reference pressure p_{ref}, will lead to an indication of the critical condition of the machine element 21.

Due to the critical fatigue crack propagation a_{detected} and, thereby, the collision of the fatigue crack with the bore hole 27 as shown in figure 2B, the pressure inside of the bore hole 27 decreases and this is detected and indicated by the failure monitoring system according to the present invention. Hence, a critical fatigue crack propagation a_{detected} can be detected reliably in time by the failure monitoring system according to the invention and the operation of the machine element 21 or the respective railway vehicle can be stopped. Accordingly, a railway axle 22 can be achieved that is less susceptible to failure due to fatigue crack propagation in comparison to the state of the art as shown in figure 1B.

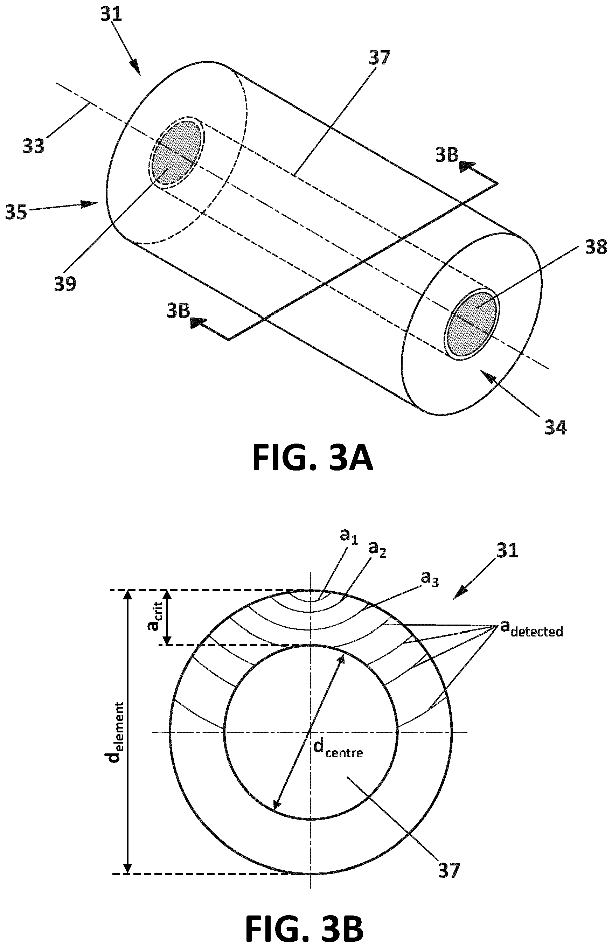

There are several ways to arrange the bore holes of the failure monitoring system according to the invention, as will be explained in the following with reference to the embodiments of figures 3A, 3B, 4A, 4B, 5A, and 5B.

Figure 3A is a schematic perspective view of a failure monitoring system according to a particular embodiment of the invention. The failure monitoring system is integrated into a machine element 31 comprising a centre line 33, a first end face 34, and a second end face 35. The first end face 34 and the second end face 35 are approximately perpendicular to the centre line 33 of the machine element 31 and the machine element 31 is approximately axially symmetrical around the centre line 33. The machine element 31 has a circular cross-section as best seen in figure 3B. In some embodiments, the machine element 31 is an elongated machine element, that is to say, a length of the machine element 31 in the axial direction is greater than a diameter of the machine element 31.

The failure monitoring system comprises a bore hole 37 which is centric and aligned with the centre line 33 of the element 31. The bore hole 37 extends from the first end face 34 to the second end face 35, that is, the bore hole 37 extends through the entire extension of the machine element 31 and has two openings at its opposite ends, namely one at the first end face 34 and the opposite one at the second end face 35. The bore hole 37, again, is filled with pressurized fluid, in accordance with the description of the embodiment of the invention in figure 2B.

In order to avoid that pressurized fluid can exit the bore hole 37 in a non-critical condition of the machine element 31, the bore hole 37 is closed at its ends. That is, the bore hole 37 is closed at the first end face 34 of the machine element 31 by a first pressure sensor 38 and at the second end face 35 by a second pressure sensor 39. At the same time, each of the first and second pressure sensors 38, 39 is configured to measure the control pressure p_{control} inside of the bore hole 37.

Figure 3B shows the failure monitoring system of figure 3A in a cross-sectional view according to lines 3B in figure 3A, with the machine element 31 being in a critical condition due to a critical fatigue crack propagation, which critical fatigue crack propagation is represented in various states in accordance with various depths of the particular fatigue cracks. That is, the outer first three lines a₁, a₂, and a₃ represent a fatigue crack as it propagates that is not being detected yet, whereas when the fatigue crack further propagates and has a size of any one of the four inner lines being located closer to the centre of the machine element 31 (these four inner lines representing such critical fatigue crack), the fatigue crack is in a critical condition to be detected. Hence, the four inner lines represent the critical fatigue crack propagation a_{detected}. The fatigue crack being represented by the three inner lines (critical condition due to the critical fatigue crack propagation a_{detected}) has reached the bore hole 37 having a diameter d_{centre}.

The critical fatigue crack propagation a_{detected} and, thereby, a critical condition of the machine element 31 is detected by the measured pressure loss inside of the bore hole 37 which is caused by the fatigue crack colliding with the bore hole 37 and the exit of pressurized fluid. This pressure loss is detected by both or at least by one of the first and second pressure sensors 38, 39. The detection of the fatigue crack propagation a_{detected} by the failure monitoring system and the indication of the critical condition of the machine element 31 takes place in accordance with the description already given with regard to the embodiment of the invention in figures 2A and 2B.

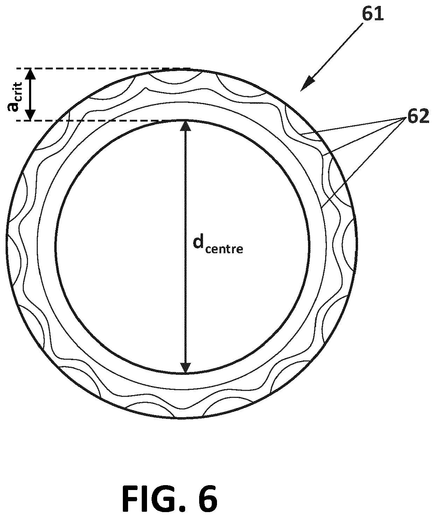

In order to determine the diameter d_{centre}, the process described with reference to figure 6 is followed by whereby the value of a_{crit} is determined using the Standard BS7910 (by means of the straight-fronted and semi-circular flaw in round bar model) or the Standard API579 for a crack with multiple starting points as illustrated in figure 6, that is to say, for a fully circumferential flaw.

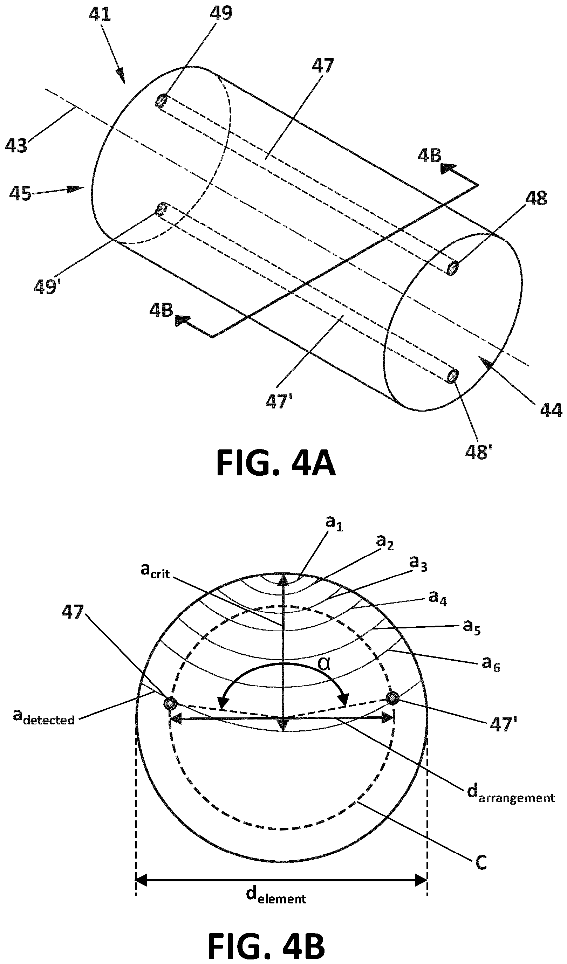

Figure 4A is a schematic perspective view of a failure monitoring system according to another particular embodiment of the invention. The failure monitoring system is integrated into a machine element 41 comprising a centre line 43, a first end face 44, and a second end face 45. The first end face 44 and the second end face 45 are approximately perpendicular to the centre line 43 of the machine element 41 and the machine element 41 is approximately axially symmetrical around the centre line 43. The machine element 41 has a circular cross-section as best seen in figure 4B. In some embodiments, the machine element 41 is an elongated machine element.

The failure monitoring system comprises, in contrast to the embodiment as shown in figures 3A and 3B, two bore holes 47, 47' which are eccentric and, in some embodiments such as this one of figures 4A and 4B, parallel to the centre line 43 of the element 41. The bore holes 47, 47' extend from the first end face 44 to the second end face 45, that is, the bore holes 47, 47' extend through the entire extension of the machine element 41 and each of the bore holes 47, 47' has two openings at its opposite ends, namely one at the first end face 44 and the opposite one at the second end face 45. The bore holes 47, 47', again, are filled each with pressurized fluid, in accordance with the description of the embodiment of the invention in figure 2B.

In order to avoid that pressurized fluid can exit the respective bore hole 47, 47' in a non-critical condition of the machine element 41, the bore holes 47, 47' are closed at its ends. That is, each of the bore holes 47, 47' is closed at the first end face 44 of the machine element 41 by a first pressure sensor 48, 48' and at the second end face 45 by a second pressure sensor 49, 49'. At the same time, each of the first and second pressure sensors 48, 48', 49, 49' is configured to measure the control pressure p_{control} inside of the respective bore hole 47, 47'.

Figure 4B shows the failure monitoring system of figure 4A in a cross-sectional view according to lines 4B in figure 4A, with the machine element 41 being in a critical condition due to a critical fatigue crack propagation a_{detected}. The two bore holes 47, 47' are arranged approximately equidistantly on a bore hole circle C having a predetermined diameter d_{arrangement} around the centre line 43 of the machine element 41. At the beginning of the crack propagation, the fatigue crack is in the state represented by the most inner line (critical condition due to the critical fatigue crack propagation a_{detected}) that may reach the bore hole 47, whereas - in accordance with the corresponding description in connection with figure 3B - when the fatigue crack further propagates and is in the state represented by any one of the six outer lines a₁, a₂, a₃, a₄, a₅, and a₆, it is not yet detected by the failure monitoring system shown in figure 4B. The amount of the bore holes 47, 47' arranged on the bore hole circle C in the present embodiment is two but this number is not limited to the amount of two. Also, less or more than two bore holes 47, 47' could be arranged on the bore hole circle C and, by the provision of a higher number of bore holes, a critical fatigue crack propagation could be detected with a higher probability.

In order to determine the diameter d_{arrangement}, the process described with reference to figure 6 is followed by whereby the value of a_{crit} is determined using the Standard BS7910 (by means of the fully circumferential external surface flaw in cylinder model) or the Standard API579 for a crack with multiple starting points as illustrated in figure 6, that is to say, for a fully circumferential flaw.

Further, in this and in other embodiments, a minimum number N of bore holes 47, 47' that need be provided in order to detect, with the failure monitoring system, the critical fatigue crack propagation a_{detected} is greater than 360 degrees divided by an aperture angle α, i.e. alpha, that is to say, N is a natural number established such that: N > 360 / α. The aperture angle α is defined by the angle between a first intersection of the bore hole circle C with the crack corresponding to the critical fatigue crack and a second intersection of the bore circle C with the crack corresponding to the critical fatigue crack, the angle being measured from the centre of the cross-section of the machine element 41 (which is a point along the centre line 43). In the embodiment of figures 4A-4B, the first intersection coincides with the position of a first bore hole 47, and the second intersection coincides with the position of a second bole hole 47'. As it is readily apparent, the smaller the size a_{crit} (of semi-circular flaws, and as determined by means of the Standard BS7910 or the Standard API579) is, the smaller the aperture angle α will be, and thus the greater the minimum number N of bore holes will be in order to be able to detect the critical fatigue crack propagations with the failure monitoring system. Furthermore, since the aperture angle α is based on the intersections of the critical crack with the bore circle C, and since as described with reference to figure 6 the diameter d_{arrangement} of the bore circle C is established such that d_{arrangement} > dₑₗₑₘₑₙₜ - 2·a_{crit}, as the diameter is made greater or smaller, the aperture angle α will also change for a given critical fatigue crack.

The critical fatigue crack propagation a_{detected} and, thereby, a critical condition of the machine element 41 are detected by the measured pressure loss inside of the respective bore hole 47 which is caused by the fatigue crack colliding with the respective bore hole 47 and the exit of pressurized fluid out of the respective bore hole 47. This pressure loss is detected by both or at least by one of the first and second pressure sensors 48, 49 which are arranged at the opposite ends of the respective bore hole 47. The detection of the fatigue crack propagation a_{detected} by the failure monitoring system and the indication of the critical condition of the machine element 41 takes place in accordance with the description already given with regard to the embodiment of the invention in figures 2A and 2B.

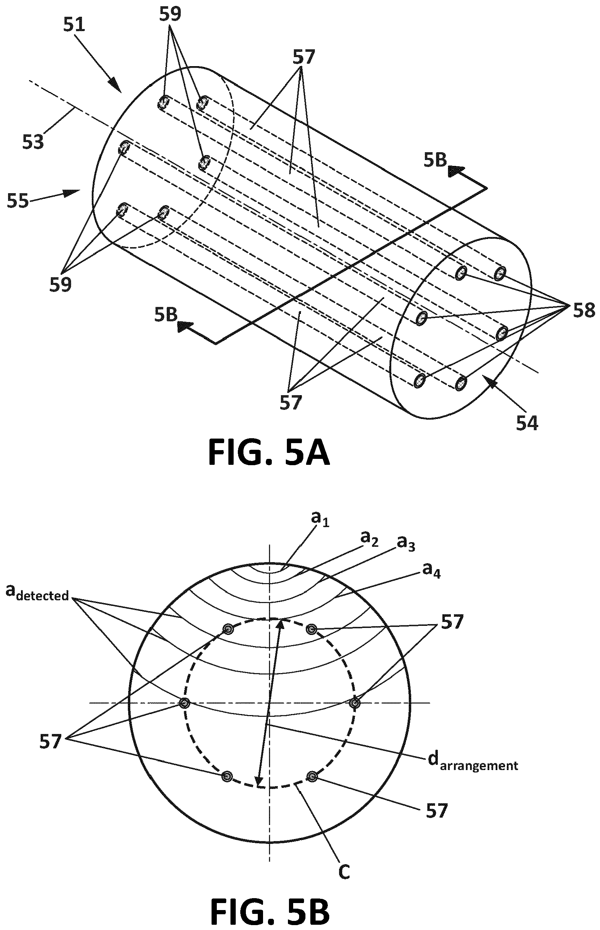

Figure 5A is a schematic perspective view of a failure monitoring system according to another particular embodiment of the invention. The failure monitoring system is integrated into a machine element 51 comprising a centre line 53, a first end face 54, and a second end face 55. The first end face 54 and the second end face 55 are approximately perpendicular to the centre line 53 of the machine element 51 and the machine element 51 is approximately axially symmetrical around the centre line 53. The machine element 51 has a circular cross-section as best seen in figure 5B. In some embodiments, the machine element 51 is an elongated machine element.

The failure monitoring system comprises, in contrast to the embodiment shown in figures 4A and 4B, six bore holes 57 which are eccentric and parallel to the centre line 53 of the element 51. The bore holes 57 extend from the first end face 54 to the second end face 55, that is, the bore holes 57 extend through the entire extension of the machine element 51 and each of the bore holes 57 has two openings at its opposite ends, namely one at the first end face 54 and the opposite one at the second end face 55. The bore holes 57, again, are filled each with pressurized fluid, in accordance with the description of the embodiment of the invention in figure 2B.

In order to avoid that pressurized fluid can exit the respective bore hole 57 in a non-critical condition of the machine element 51, the bore holes 57 are closed at its ends. That is, each of the bore holes 57 is closed at the first end face 54 of the machine element 51 by a first pressure sensor 58 and at the second end face 55 by a second pressure sensor 59. At the same time, each of the first and second pressure sensors 58, 59 is configured to measure the control pressure p_{control} inside of the respective bore hole 57.

Figure 5B shows the failure monitoring system of figure 5A in a cross-sectional view according to lines 5B in figure 5A, with the machine element 51 being in a critical condition due to a critical fatigue crack propagation, which critical fatigue crack propagation is represented in various states in accordance with various depths of the particular fatigue crack. That is, the outer first four lines a₁, a₂, a₃, and a₄ represent the fatigue crack (as it propagates) that is not being detected yet, whereas the further three lines being located closer to the centre of the machine element 51 represent such critical fatigue crack (as it propagates) being in a critical condition to be detected. Hence, the three inner lines represent the critical fatigue crack propagation a_{detected}. The six bore holes 57 are arranged approximately equidistantly on a bore hole circle C having a predetermined diameter d_{arrangement} around the centre line 53 of the machine element 51. The fatigue crack that propagates as represented by the three inner lines (critical condition due to the critical fatigue crack propagation a_{detected}) has reached one of the bore holes 57. The amount of the bore holes 57 arranged on the bore hole circle C in the present embodiment is six but this number is not limited to the amount of six. Also, less or more than two bore holes 57 could be arranged on the bore hole circle C and, by the provision of a higher number of bore holes, a critical fatigue crack propagation could be detected with a higher probability. The value of the diameter d_{arrangement} and the minimum number N of bore holes 57 are established in accordance with the equations described with reference to the embodiment of figures 4A and 4B, and the process explained with reference to figure 6.

The critical fatigue crack propagation a_{detected} and, thereby, a critical condition of the machine element 51 is detected by the measured pressure loss inside of the respective bore hole 57 which is caused by the fatigue crack colliding with the respective bore hole 57 and the exit of pressurized fluid out of the respective bore hole 57. This pressure loss is detected by both or at least by one of the first and second pressure sensors 58, 59 which are arranged at the opposite ends of the respective bore hole 57. The detection of the fatigue crack propagation a_{detected} by the failure monitoring system and the indication of the critical condition of the machine element 51 takes place in accordance with the description already given with regard to the embodiment of the invention in figures 2A and 2B.

The diameter of the bore holes 27, 47, 47', 57 has a value of approximately 8 mm. Such bore hole diameters have been found out as being preferable with regard to, on the one hand, the remaining strength and stability of the machine elements 21, 41, 51 as every bore hole 27, 47, 47', 57 as such causes a weakening of the material. On the other hand, the size of the bore holes 27, 47, 47', 57 has been found out to be sufficient with regard to filling the bore holes 27, 47, 47', 57 with pressurized fluid and with regard to measuring the control pressure p_{control} inside of the bore holes 27, 47, 47', 57 reliably with the respective pressure sensors 28, 48, 48', 58.

Due to the detection of a fatigue crack propagation a_{detected} in the machine elements 21, 31, 41, 51 by the failure monitoring system in the described manner, a failure monitoring system is achieved which reliably identifies a critical fatigue crack propagation in time. As shown, this identification of critical fatigue crack can be carried out in a real-time manner during the operation of the respective machine element 21, 31, 41, 51. Therefore, no stopping of the operation and no individual optical control of the machine elements 21, 31, 41, 51 has to be executed. In conclusion, the proposed failure monitoring system for machine elements allows a less time-consuming and less cost-intensive monitoring of machine elements with regard to fatigue cracks.

Figure 6 shows an exemplary machine element 61 having represented therein failure processes in the form of a fully circumferential fatigue crack 62.

According to such fatigue crack 62, and in order to determine the diameter d_{centre} described with reference to figure 3B and/or the diameter d_{arrangement} with reference to figures 4B and 5B, the value of a_{crit} is determined using the Standard BS7910 (by means of the fully circumferential external surface flaw in cylinder model) or the Standard API579 for a crack 62 with multiple starting points as illustrated in figure 6, that is to say, for a fully circumferential flaw.

In some embodiments, such as the one of figures 3A-3B, a minimum value of the diameter d_{centre} for the bore hole (e.g. the bore hole 37 of the embodiment of figures 3A-3B) shall be greater than a diameter of the machine element 31 dₑₗₑₘₑₙₜ minus two times a size of the critical fatigue crack (for fully circumferential surface cracks) a_{crit} to be detected by the failure monitoring system, that is to say, d_{centre} is established such that: d_{centre} > dₑₗₑₘₑₙₜ- 2·a_{crit}. As it is readily apparent, the value of d_{centre} must be smaller than the diameter of the machine element 31.

In some other embodiments, such as the one of figures 4A-4B or the one of figures 5A-5B, a minimum value of the diameter d_{arrangement} of the bore hole circle C shall be greater than a diameter of the machine element (e.g. the machine element 41 of the embodiment of figures 4A-4B, or the machine element 51 of the embodiment of figures 5A-5B) dₑₗₑₘₑₙₜ minus two times a size of the critical fatigue crack (for fully circumferential surface cracks) a_{crit} to be detected by the failure monitoring system, that is to say, d_{arrangement} is established such that: d_{arrangement} > dₑₗₑₘₑₙₜ - 2·a_{crit}. As it is readily apparent, the value of d_{arrangement} must be smaller than the diameter of the machine element 41, 51.

As aforementioned, the size of the critical fatigue crack a_{crit} is usually determined by means of the Standard BS7910 or the Standard API579. Ring cracks or fully circumferential cracks are the most critical cracks that affect such machine elements since their critical size would be the smallest to promote a catastrophic failure and these propagate according to the lines 62 of figure 6. Based on the size of ring cracks, the value of d_{centre} is established, thereby making possible the detection with the failure monitoring system of cracks having one and/or multiple starting points.

In the context of the present invention, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A failure monitoring system for a machine element (21, 31, 41, 51), in particular for an axle (22), for detecting a fatigue crack propagation (a, a_{detected}) in said machine element (21, 31, 41, 51), the system comprising said machine element (21, 31, 41, 51), wherein said machine element (21, 31, 41, 51) has a first end face (24, 34, 44, 54), a second end face (35, 45, 55) opposite to said first end (24, 34, 44, 54), and a centre line (23, 33, 43, 53) extending from said first end face (24, 34, 44, 54) to said second end face (35, 45, 55), **characterised in that** the failure monitoring system comprises:
- at least one bore hole (27, 37, 47, 47', 57) in said first end face (24, 34, 44, 54) of said machine element (21, 31, 41, 51), wherein said at least one bore hole (27, 37, 47, 47', 57) is filled with a pressurized fluid (F) and is closed at said first end face (24, 34, 44, 54) in such way that, in a non-critical condition of said machine element (21, 31, 41, 51), a control pressure (p_{control}) inside of said at least one bore hole (27, 37, 47, 47', 57) is a positive pressure (po);
- at least a first pressure sensor (28, 38, 48, 48', 58) being configured to measure said control pressure (p_{control}) inside of said at least one bore hole (27, 37, 47, 47', 57); and
- a fatigue crack propagation detection means being configured to indicate a critical condition of said machine element (21, 31, 41, 51) in case said first pressure sensor (28, 38, 48, 48', 58) measures a decrease of said control pressure (p_{control}) below a predetermined reference pressure (p_{ref}), wherein said predetermined reference pressure (p_{ref}) is less than or equal to said positive pressure (p₀).

2. The failure monitoring system of claim 1, wherein said machine element (21, 31, 41, 51) is an axle (22) for a railway vehicle.

3. The failure monitoring system of claim 1 or 2, wherein said at least one bore hole (37) extends approximately centric through said machine element (31), in particular aligned with said centre line (33), and has a predetermined diameter (d_{centre}).

4. The failure monitoring system of claim 1 or 2, wherein said at least one bore hole (27, 47, 47', 57) extends approximately eccentric through said machine element (21, 41, 51), in particular parallel to said centre line (23, 43, 53).

5. The failure monitoring system of claim 4, comprising a plurality of said at least one bore holes (47, 47', 57) arranged approximately equidistantly on a bore hole circle (C) having a predetermined diameter (d_{arrangement}) around said centre line (43, 53).

6. The failure monitoring system of claim 4 or 5, wherein each of said at least one bore hole (27, 47, 47', 57) has a diameter approximately between 4 mm and 10 mm, in particular of approximately 8 mm.

7. The failure monitoring system of any of claims 1 - 6, wherein said at least one bore hole (27, 37, 47, 47', 57) is closed at said first end face (24, 34, 44, 54) by said first pressure sensor (28, 38, 48, 48', 58).

8. The failure monitoring system of any of claims 1 - 7, further comprising a second pressure sensor (39, 49, 49', 59) being configured to measure said control pressure (p_{control}) inside of said at least one bore hole (37, 47, 47', 57).

9. The failure monitoring system of any of claims 1 - 8, wherein said at least one bore hole (37, 47, 47', 57) extends to said second end face (35, 45, 55) of the machine element (31, 41, 51) and is closed at said second end face (35, 45, 55) in such way that, in said non-critical condition of said machine element (31, 41, 51), said control pressure (p_{control}) inside of said at least one bore hole (37, 47, 47', 57) is maintained.

10. The failure monitoring system of claims 9 and 10, wherein said at least one bore hole (37, 47, 47', 57) is closed at said second end face (35, 45, 55) by said second pressure sensor (39, 49, 49', 59).

11. The failure monitoring system of any of claims 1 - 10, wherein the machine element (21, 31, 41, 51) has a circular cross-section.

12. The failure monitoring system of any of claims 1 - 11, wherein the machine element (21, 31, 41, 51) is an elongated machine element (21, 31, 41, 51).

13. A railway axle (22) comprising a failure monitoring system according to any of claims 1 to 12.

14. A bolt for a foundation of a wind turbine comprising a failure monitoring system according to any of claims 1 to 12.
